# EUROPEAN PATENT SPECIFICATION

(11) **EP 1 095 524 B1**
(45) Date of publication and mention of the grant of the patent: **25.08.2004**
(21) Application number: 99931191.3
(22) Date of filing: 25.06.1999
(51) Int. Cl.: H04Q 3/00

(54) **SIGNALLING IN A TELECOMMUNICATIONS NETWORK**
SIGNALISIERUNG IN EINEM TELEKOMMUNIKATIONSNETZWERK
SIGNALISATION DANS UN RESEAU DE TELECOMMUNICATIONS

(30) Priority: 06.07.1998 FI 981554
(43) Date of publication of application: 02.05.2001
(73) Proprietor: Telefonaktiebolaget LM Ericsson (publ), 164 83 Stockholm (SE)
(72) Inventor: KHELLO, Robert, S-145 59 Norsborg (SE)
(74) Representative: Tonscheidt, Andreas, Dr.
(86) International application number: PCT/EP1999/004440
(87) International publication number: WO 2000/002411

(56) References cited:
- EP-A- 0 631 447
- WO-A-97/09808
- US-A- 5 276 679
- PATENT ABSTRACTS OF JAPAN vol. 1998, no. 02, 30 January 1998 (1998-01-30) & JP 09 271046 A (NEC CORP), 14 October 1997 (1997-10-14)

## Description

### Field of the Invention

The present invention relates to signalling in a telecommunications network and more particularly, though not necessarily, to the transmission of information relating to the address of a calling user or users over the network.

### Background to the Invention

Public telephone networks are increasingly making use of a signalling protocol known as Signalling System No. 7 (SS7) to control the networks and to carry data necessary for call set-up and control. Transmissions in such networks, both user data and signalling, are physically carried by a Time Division Multiple Access (TDMA) transmission protocol operating in a given frequency band. For example, in Europe the E.1 transmission protocol is used whilst in the USA the T.1 protocol is used (the main difference between these two protocols being the number of time slots per TDMA frame).

SS7 is usually referred to as a common channel signalling system because signalling data packets are carried on a common channel constructed from one time slot per TDMA frame. A node of the network (e.g. a transit exchange) determines whether or not a signalling message is for it, or whether the message should be forwarded to another node, on the basis of a destination Point Code address conveyed with the message.

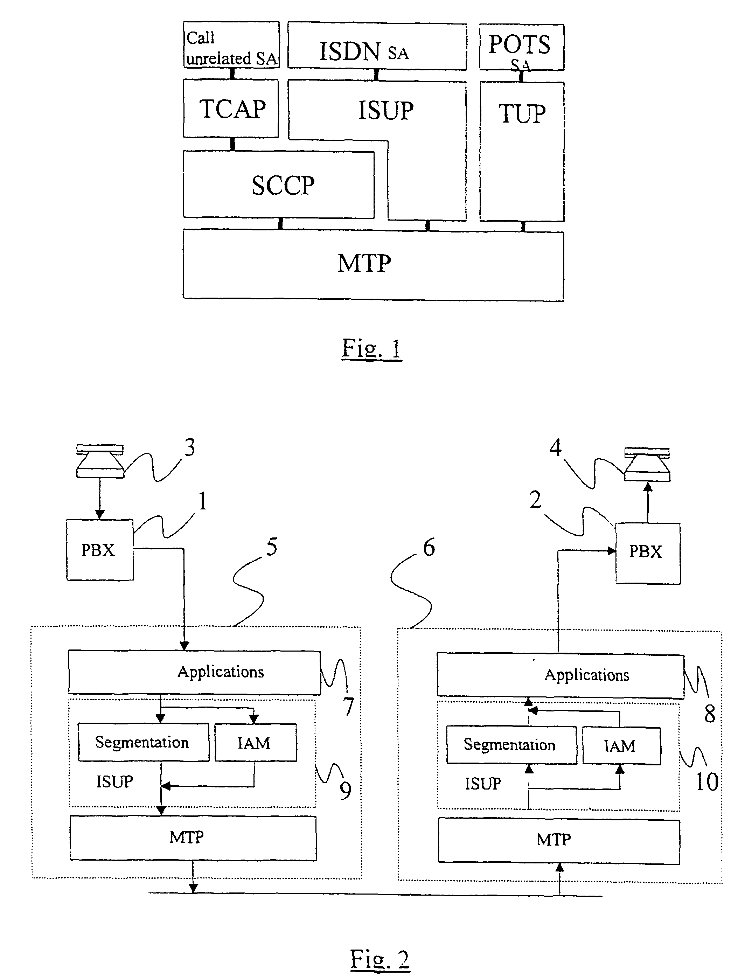

Figure 1 illustrates the functional architecture of an SS7 network node. The lowermost layer of SS7 is the Message Transfer Part (MTP) which provides the SS7 message segment for incorporation into the allocated slot in the TDMA frame. The MTP is responsible for reliably transferring messages on behalf of certain User Parts across the SS7 network despite possible failures in the network (e.g. using error checking, correction, resending etc.).

The User Parts making use of the MTP include a Telephony User Part (TUP), Signalling Connection Control Part (SCCP), Transaction Capabilities Application Part (TCAP), and ISDN Signalling User Part (ISUP). The TUP, TCAP, and ISUP handle respectively signalling associated with call unrelated service applications, an Integrated Digital Services Network (ISDN) service application, and a Plain Old Telephone Service (POTS) application. TUP, SCCP, and TCAP are not of particular relevance here and for further information the reader should refer to the relevant standards(ITU-T Q.700 series of recommendations). The following discussion is concerned primarily with the ISUP.

The Integrated Digital Services Network (ISDN) is now finding widespread use in the transmission of all types of data (e.g. telephony, facsimile, telex) using a common digital format. In its broadest implementation, ISDN provides for the end-to-end transmission of digital data in a common format, i.e. from a calling user's telephone to a called user's telephone. In a narrower sense, ISDN may provide for communication between exchanges of a telecommunications network whilst, for example, one or both of the calling and called user communicate with their associated local exchange using an analogue format.

One of the functions of the ISUP within the ISDN is to assist in establishing an end-to-end connection between the calling user's telephone and the called user's telephone. In particular, this involves reserving, during a call set-up phase, a user data channel between the local exchanges of the calling user and the called user (if the exchanges are different). For this purpose, ISUP makes use of an Initial Address Message (IAM) capable of conveying 252 octets of data and which can be transmitted (via the MTP) in one of the E.1/T.1 TDMA slots allocated to the SS7 network (one IAM per call). The information conveyed by the IAM consists of many different parameters and flags, including the calling user's number and possibly a forwarding/redirecting number. The structure of the IAM message is defined in ITU-T recommendation Q.763.

It is currently proposed to introduce new services into telecommunication networks such as number portability, Unidirectional personal telecommunication, intelligent network services and calling name identification presentation. The existing calling user identity information (carried by the IAM) will not serve the purpose of the existing value added services or service applications (e.g. emergency services, malicious call identification) in addition to these proposed new services (in particular because number portability will result in the loss of the geographic significance of a caller's number).

In order to support the proposed new services, it will be necessary to enhance calling user addressing information transmitted in the call set-up phase of a call. The enhancement is distinguished by the separation of logical and physical addressing information of a calling user. For example:
1. The geographic location (i.e. latitude, longitude, and altitude) of the calling user;
2. The logical calling user ID (e.g. directory number, UPT number, IN service number);
3. The logical subscriber ID (i.e. the identity of the subscription owner who does not have to be the actual calling user (for example where the logical calling user is the identity of an employee and the logical subscriber ID is the company receiving the bill);
4. The physical calling user ID (i.e. an identity related to the physical/geographic connection of the calling user to the serving telecommunication network);
5. The calling user name (i.e. a text string corresponding to the name of the calling user; and
6. Additional calling user information (i.e. information received from the user).

The above identities may be transmitted from the caller's local exchange to the called user, or to some intermediate node. In the case of a call diversion, the identities referred to in items 1 to 5 will be repeated in a call, i.e. the actual calling user's ID and the new calling user's ID (i.e. originally called subscriber) in a forwarded call.

As the list of calling user information becomes more extensive, its sending by dedicated parameters within the IAM, in addition to the mandatory or essential call set-up data, may not be possible in all cases. An alternative approach is to send the data using the SCCP signalling capability which provides an end-to-end association. However, this presents an obstacle to the importation of other services (e.g. origin dependent routing) running at an intermediate node.

Under the existing ISUP specification, there is the possibility to send a "segmentation" message (SGM), following an IAM message providing that the SGM is flagged in the IAM. The SGM is also 252 octets in length and allows supplementary information to be transmitted. Thus, it is possible to include additional calling user addressing information in the SGM.
However, in many cases, the extra 252 octets may still not be sufficient.

### Summary of the Present Invention

It is an object of the present invention to overcome or at least mitigate the above noted disadvantages of existing SS7 based telecommunication networks. In particular, it is an object of the present invention to provide increased capacity for transmitting calling user addressing information during a call set-up phase.

According to a first aspect of the present invention there is provided a method of transmitting calling user addressing information in a telecommunications network using Signalling System No.7, the method comprising conducting a call set-up phase between two nodes of the telecommunication network to reserve a channel for user data, the set-up phase comprising:
transmitting an Initial Address Message from the first node to a subsequent node, said Initial Address Message containing an Application Transfer Mechanism indicator to notify the subsequent node that addressing information will be transmitted in one or more subsequent Application Transfer Mechanism Messages; and
transmitting said one or more Application Transfer Mechanism Messages from the first node to the subsequent node.

Embodiments of the present invention enable a substantially unlimited amount of addressing information to be transmitted using Application Transfer Mechanism Messages.

Preferably, said Initial Address Message contains a limited amount of calling user addressing information, for example the calling user's telephone number.

Preferably, the Initial Address Message and the Application Transfer Mechanism Message(s) each contain an Application Transport Parameter (APP) which carries said addressing information. More preferably, each APP contains a flag (e.g. a Unidirectional Indicator), the purpose of which is to indicate to a receiving node whether or not the APP pertains to a peer-to-peer communication or to any application which may be present at the receiving node.

Preferably, the calling user addressing information transmitted in said one or more Application Transfer Mechanism Messages includes at least one of: the calling user's geographic location; the logical calling user ID; the logical subscriber ID; the physical calling user ID; the calling user name; and corresponding diverting user identities.

Preferably, said Initial Address Message and said Application Transfer Mechanism Message(s) are transmitted over said telecommunication network in respective single data packets, i.e. in respective Time Division Multiple Access (TDMA) time slots. More preferably, the last transmitted Application Transfer Mechanism Message contains a flag set to indicate to the receiving node that the message is the last Application Transfer Mechanism Message.

According to a second aspect of the present invention there is provided apparatus for transmitting calling user addressing information in a telecommunications network using Signalling System No.7, wherein a call set-up phase is conducted between two nodes of the telecommunication network to reserve a channel for user data, the apparatus comprising:
first processing means provided at said first node and arranged to generate an Initial Address Message and to transmit this Message from the first node to the subsequent node, said Initial Address Message containing an Application Transfer Mechanism indicator to notify the subsequent node that addressing information will be transmitted in one or more subsequent Application Transfer Mechanism Messages; and
second processing means arranged to generate said one or more Application Transfer Mechanism Messages and to transmit the Message(s) from the first node to the subsequent node.

Preferably, said first and second processing means are provided by a suitably programmed computer system.

According to a third aspect of the present invention there is provided a method of transmitting information in a telecommunications network, using Signalling System No.7, during a call set-up phase between two nodes of the network, the information being transmitted unidirectionally from a first of the nodes to the subsequent node and being intended for an application present at the subsequent node, the method comprising:
transmitting an Initial Address Message from said first node to the subsequent node, said Initial Address Message containing an Application Transfer Mechanism indicator to notify the subsequent node that said information will be transmitted in one or more subsequent Application Transfer Mechanism Messages; and
transmitting said one or more Application Transfer Mechanism Messages from the first node to the subsequent node,
the method further comprising including in the or each Application Transfer Mechanism Message a flag for indicating to a receiving node whether or not the message is a unidirectional message.

Said subsequent node may be an intermediate node in the transmission path of said information, the method comprising relaying received Application Transfer Mechanism Messages to a subsequent node in an unaltered state when the messages contain a unidirectional flag which is not set.

### Brief Description of the Drawings

For a better understanding of the present invention and in order to show how the same may be carried into effect reference will now be made, by way of example, to the accompanying drawings, in which:
Figure 1 illustrates functionally the architecture of a conventional Signalling System No.7 node;
Figure 2 illustrates functionally the architecture a modified Signalling System No.7 network;
Figure 3a is a flow chart illustrating the reception of IAM and APM messages at a receiving exchange of the system of Figure 2; and
Figure 3b is a flow chart showing illustrating the process of assembling message segments at a receiving exchange of the system of Figure 2.

### Detailed Description of Certain Embodiments

The shortcomings of the existing ISUP vis-à-vis conveying calling user addressing information have been described above. It is proposed here to overcome these shortcomings by making use of a new transport mechanism which has recently been defined for ISUP.

This new transport mechanism is known as the Application Transport Mechanism (APM) and has been specified (draft ITU recommendation Q.765) in order to enable ISUP to provide the same capabilities as Transaction Capabilities Application Part (TCAP). In particular, APM enables ISUP to create a signalling data pipeline between two network nodes for use by applications running over the ISUP.

Consider for example the case where it is necessary to send signalling data between two public telephone exchanges (PBXs) which are outside of the SS7 network (and to which the calling user 3 and called user 4 are connected respectively). This situation is illustrated in Figure 2, where the PBXs are indicated by reference numerals 1,2 and are connected to respective exchanges 5,6 of the SS7 network. The signalling data requirement of the PBXs is likely to exceed that which can be provided by the IAM and SGM (i.e. any space in the IAM and SGM which remains unoccupied after the necessary ISDN call set-up flags and parameters have been included) which are generated by the ISUPs 9,10.

The solution provided by APM is to create a pipeline via which PBX interface applications 7,8, existing at the two SS7 network exchanges 5,6 to which the PBXs 1,2 are respectively connected, may communicate. When a call connection is requested by the calling user 3 via the associated PBX 1, the signalling data is passed by the application 7 at the SS7 exchange 5 to the ISUP 9. An IAM is then generated by the ISUP for transmission to the remote SS7 exchange 6. However, the IAM includes an additional indicator indicating that further APM messages are to follow. This indicator, termed the "APM segmentation indicator'', is contained in an Application Transport Parameter (APP) having the following multi-octet (1 to 4n) structure:

| | 8 | 7 | 6 | 5 | 4 | 3 | 2 | 1 |
|---|---|---|---|---|---|---|---|---|
| 1 | Ext | Application Context Identifier | | | | | | |
| 2 | Ext | UNI | SPARE | | | | ATII | |
| | | | | | | | B | A |
| 3 | Ext | SI | APM segmentation indicator | | | | | |
| 3a | Ext | SLR | | | | | | |
| 4a to 4n | Encapsulated Application Information | | | | | | | |

The APP further contains an Application Context Identifier (ACI) which identifies the application for which the APP is intended. Thus, in the present example, the ACI identifies the APP as intended for the PBX interface application 8.

The signalling data received from the application 7 is then segmented into a series of APP containing APMs, each with the appropriate segmentation and context indicators set. On the basis of these indicators, the ISUP 10 at the receiving SS7 exchange 6 is able to reassemble the signalling information and pass it, otherwise unaltered, to the associated PBX interface application 8. It is noted that the IAM and the subsequent APMs are delivered to the receiving SS7 exchange 6 on the basis of the corresponding SS7 Point Code which is included in each of the messages. It is also noted that in this end-to-end (or peer-to-peer) transmission process the IAM and the APMs are not "opened" at any intermediate nodes present between the two exchanges.

It is proposed here to make use of the APMs to transmit additional calling user addressing information which cannot be included in an IAM transmitted during a call set-up phase. This extends the use of the APM beyond merely providing a pipeline through the network (and the ISUPs) for "external" applications.

Suppose that it is desired to convey a relatively large amount of calling user addressing information from the originating SS7 exchange 5 to the terminating SS7 exchange 6 during a call set-up phase, such that all of this information cannot be included in the associated single IAM (or more particularly the APP of the IAM). Any overflow addressing information may be sent in subsequent APP containing APMs. This however requires the definition of a new identifier referred to here as "UNI" which identifies the APP, to a receiving node, as conveying (conventional) peer-to-peer data transfer (identifier=0) or unidirectional data transfer (identifier=1). This identifier may be allocated to an appropriate spare identifier of the APP, e.g. bit 7 of octet 2 as shown in the above table.

The UNI identifier allows intermediate nodes (e.g. exchanges) to skip the segment reassembly process, thereby saving time and processing in the call set up phase. More particular, intermediate nodes will only reassemble those segments belonging to APPs for which the UNI identifier is set to 0, i.e. relating to peer-to-peer data transfers. Where the UNI identifier is set to 1, the APP is passed unaltered to the next node.

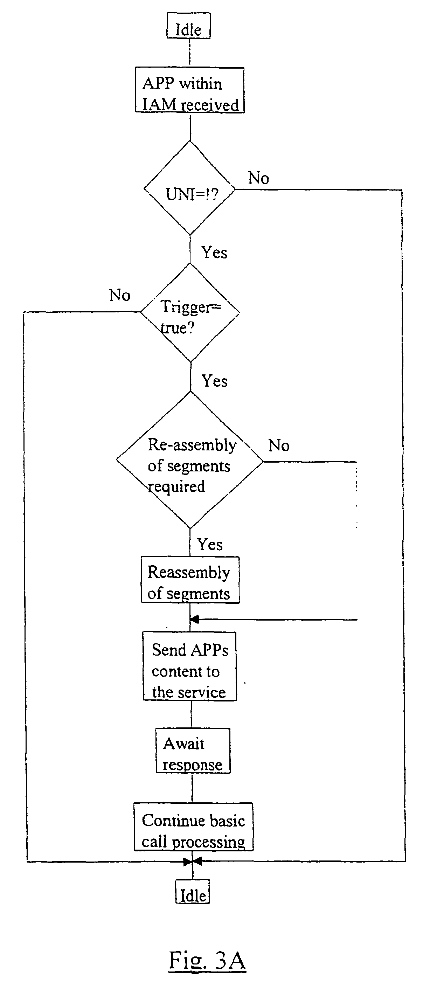

At the destination exchange, the basic call establishment procedure first extracts the APP from within the IAM or APM. It then checks to see if the UNI identifier is set to 1. If so, then the procedure knows that the message is one of a sequence of messages requiring recombination at the exchange. The APP contains a specific Application Context Identifier (octet 1) which identifies the application for which the conveyed information is destined. In the present example, this application will be an application which makes use of the calling party addressing information. This process is illustrated generally in Figure 3A.

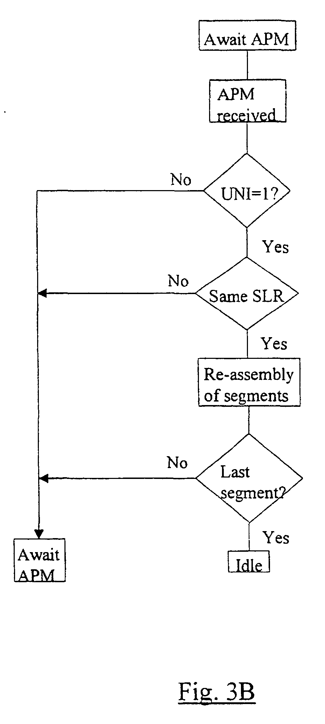

Figure 3B illustrates in more detail the "Re-assembly of segments" operation of Figure 3A. Note that only those APPs having the same Segment Local Reference (SLR) are combined together.

It will be appreciated that further modifications may be made to the above described embodiment without departing from the scope of the present invention. For example, whilst the above example has been concerned with the transmission of calling user addressing information, the present invention may be applied to transmit other types of information.

In certain circumstances, the transmitted information (in this case user identity information) may be required by a service application residing at an intermediate node between the exchanges 5,6. This application may be, for example, a billing application at a charging node. This requires the assistance of the ISUP to recollect the information present in the IAM. Recollection is performed when the service application sends an explicit request to the ISUP for APP triggering pertaining to the transfer of user identity information. Upon receiving two APP information elements within one IAM, the ISUP at the intermediate node is unable to distinguish the APP carrying the user identity information from the other APP (carrying specific peer-to-peer application data). To overcome this problem, the UNI flag is used by the ISUP to indicate whether the APP relates to peer-to-peer association context or whether it is part of the basic call context (and not pertaining to any predefined application.

## Claims

1. A method of transmitting calling user addressing information in a telecommunications network using Signalling System No.7, the method comprising conducting a call set-up phase between two nodes of the telecommunication network to reserve a channel for user data, the set-up phase comprising:
transmitting an Initial Address Message from said first node to the subsequent node, said Initial Address Message containing an Application Transfer Mechanism indicator to notify the subsequent node that addressing information will be transmitted in one or more subsequent Application Transfer Mechanism Messages; and
transmitting said one or more Application Transfer Mechanism Messages from the first node to the subsequent node.

2. A method according to claim 1, wherein the Initial Address Message and the Application Transfer Mechanism Message(s) each contain an Application Transport Parameter (APP) which carries said addressing information.

3. A method according to claim 2, wherein each APP contains a Unidirectional Indicator flag to indicate to a receiving node whether the APP is part of a peer-to-peer transmission or whether the APP relates to a basic call set-up context.

4. A method according to any one of the preceding claims, wherein said Initial Address Message contains a limited amount of calling user addressing information.

5. A method according to any one of the preceding claims, wherein the calling user addressing information transmitted in said one or more Application Transfer Mechanism Messages includes at least one of: the calling user's geographic location; the logical calling user ID; the logical subscriber ID; the physical calling user ID; and the calling user name.

6. A method according to any one of the preceding claims, wherein said Initial Address Message and said Application Transfer Mechanism Message(s) are transmitted over said telecommunication network in respective single data packets.

7. A method according to claim 6, wherein the last transmitted Application Transfer Mechanism Message contains an indicator set to indicate to the receiving node that the message is the last Application Transfer Mechanism Message.

8. Apparatus for transmitting calling user addressing information in a telecommunications network using Signalling System No.7, wherein a call set-up phase is conducted.between two nodes of the telecommunication network to reserve a channel for user data, the apparatus comprising:
first processing means provided at said first node and arranged to generate an Initial Address Message and to transmit this Message from said first node to the subsequent node, said Initial Address Message containing an Application Transfer Mechanism indicator to notify the second node that addressing information will be transmitted in one or more subsequent Application Transfer Mechanism Messages; and
second processing means arranged to generate said one or more Application Transfer Mechanism Messages and to transmit the Message(s) from the first node to the subsequent node.

9. Apparatus according to claim 8, wherein said first and second processing means are provided by a suitably programmed computer system.

10. A method of transmitting information in a telecommunications network, using Signalling System No.7, during a call set-up phase between two nodes of the network, the information being transmitted unidirectionally from a first of the nodes to the subsequent node and being intended for an application present at the subsequent node, the method comprising:
transmitting an Initial Address Message from said first node to the subsequent node, said Initial Address Message containing an Application Transfer Mechanism indicator to notify the subsequent node that said information will be transmitted in one or more subsequent Application Transfer Mechanism Messages; and
transmitting said one or more Application Transfer Mechanism Messages from the first node to the subsequent node,
the method further comprising including in the or each Application Transfer Mechanism Message a flag for indicating to a receiving node whether or not the message is a unidirectional message.

11. A method according to claim 10, wherein said subsequent node is an intermediate node in the transmission path of said information, the method comprising relaying received Application Transfer Mechanism Messages to a subsequent node in an unaltered state when the messages contain a unidirectional flag which is not set.

## Patentansprüche

1. Ein Verfahren zur Übermittlung von Anrufer-Adressierungsinformation in einem Telekommunikationsnetz das Signalisierungssystem Nummer 7 verwendend, wobei das Verfahren umfasst, Durchführen einer Anrufaufbau-Phase zwischen zwei Knoten des Telekommunikationsnetzes um einen Kanal zur Nutzdatenübertragung zu reservieren, wobei die Aufbau-Phase enthält:
Übertragen einer Initialen Adressierungsnachricht von einem ersten Knoten zu einem nachfolgenden Knoten, wobei besagte Initiale Adressierungsnachricht einen Anwendungsübertragungsmechanismus Indikator enthält, um den nachfolgenden Knoten zu informieren, dass Adressierungsinformation in einer oder mehreren nachfolgenden Anwendungsübertragungsmechanismus Nachrichten übertragen wird, sowie Übertragen besagter einer oder mehrerer Anwendungsübertragungsmechanismus Nachrichten vom ersten zu dem nachfolgenden Knoten.

2. Ein Verfahren nach Anspruch 1, wobei die Initiale Adressierungsnachricht und die Anwendungsübertragungsmechanismus Nachricht jeweils einen Anwendungsübertragungsparameter enthalten, der besagte Adressierungsinformation trägt.

3. Ein Verfahren nach Anspruch 2, wobei jeder Anwendungsübertragungsparameter einen Unidirektionalen Indikator Anzeiger enthält, dessen Zweck es ist dem empfangenden Knoten anzuzeigen, ob der Anwendungsübertragungsparameter auf eine Peer-to-Peer Kommunikation bezogen ist oder ob der Anwendungsübertragungsparameter auf einen Basisanrufaufbau Kontext bezogen ist.

4. Ein Verfahren nach einem der vorhergehenden Ansprüche, bei dem die Initiale Adressierungsnachricht eine begrenzte Menge von Anruferadressierungsinformation enthält.

5. Ein Verfahren nach einem der vorhergehenden Ansprüche, bei dem die Anruferadressierungsinformation, die in der einen oder mehreren Anwendungsübertragungsmechanismus Nachricht übertragen wird, wenigstens eines der folgenden enthält: den geographische Aufenthaltsort des Anrufers, die logische Kennzeichnung des Anrufers, die logische Teilnehmer Kennzeichnung, die physikalische Anrufer Kennzeichnung; den Namen des Anrufers, und die entsprechenden Kennzeichnungen des weiterleitenden Teilnehmers.

6. Ein Verfahren nach einem der vorhergehenden Ansprüche, bei dem die besagte Initiale Adressierungsnachricht und die besagte Anwendungsübertragungsmechanismus Nachricht(en) über besagtes Telekommunikationsnetz in entsprechenden einzelnen Datenpaketen übertragen werden.

7. Ein Verfahren nach Anspruch 6, bei dem die zuletzt übertragene Anwendungsübertragungsmechanismus Nachricht einen Anzeigersatz enthält, um dem empfangenden Knoten anzuzeigen, dass die Nachricht die letzte Anwendungsübertragungsmechanismus Nachricht ist.

8. Vorrichtung zur Übertragung von Anruferadressierungsinformation, in einem Telekommunikationsnetz das Signalisierungssystem Nummer 7 verwendend, wobei eine Anrufaufbauphase zwischen zwei Knoten des Telekommunikationsnetzes durchgeführt wird, um einen Kanal für Nutzdaten zu reservieren, wobei die Vorrichtung enthält:
erste Verarbeitungsmittel, zur Verfügung gestellt in einem ersten Knoten und ausgestaltet zur Generierung einer Initialen Adressierungsnachricht und zur Übertragung dieser Nachricht von dem ersten Knoten zu einem nachfolgenden Knoten, wobei besagte Initiale Adressierungsnachricht einen Anwendungsübertragungsmechanismus Anzeiger enthält, um dem nachfolgenden Knoten anzuzeigen, dass Adressierungsinformation in einer oder mehreren nachfolgenden Anwendungsübertragungsmechanismus Nachrichten übertragen wird, und
zweite Verarbeitungsmittel ausgestaltet zur Generierung besagter einer oder mehrerer Anwendungsübertragungsmechanismus Nachrichten und zur Übertragung der Nachricht(en) vom ersten Knoten zum nachfolgenden Knoten.

9. Vorrichtung nach Anspruch 8, wobei besagte erste und zweite Verarbeitungsmittel durch ein passend programmiertes Computersystem zur Verfügung gestellt werden.

10. Ein Verfahren zur Übermittlung von Anruferadressinformation in einem Telekommunikationssystem das Signalisierungssystems Nummer 7 in einer Anrufaufbau-Phase zwischen zwei Knoten des Telekommunikationsnetzes verwendend, wobei die Information unidirektional von einem ersten der Knoten zu dem nachfolgenden Knoten übertragen wird und wobei die Information für eine Anwendung bestimmt ist, die in dem nachfolgenden Knoten gegenwärtig ist, wobei das Verfahren beinhaltet:
Übertragen einer Initialen Adressierungsnachricht von besagtem ersten Knoten zu dem nachfolgenden Knoten, wobei besagte Initiale Adressierungsnachricht einen Anwendungsübertragungsmechanismus Indikator enthält, um den nachfolgenden Knoten zu benachrichtigen, dass besagte Information in einer oder mehreren Anwendungsübertragungsmechanismus Nachrichten übertragen wird, und
Übertragen besagter einer oder mehrerer Anwendungsübertragungsmechanismus Nachrichten von dem ersten Knoten zu dem nachfolgenden Knoten, wobei das Verfahren des weiteren das Einschließen eines Anzeigers in die oder jede Anwendungsübertragungsmechanismus Nachricht umfasst, um einem empfangenden Knoten anzuzeigen ob die Nachricht unidirektional ist, oder nicht.

11. Ein Verfahren nach Anspruch 10, bei dem besagter nachfolgender Knoten ein Zwischenknoten im Übertragungspfad der besagten Information ist, wobei das Verfahren das Weiterleiten empfangener Anwendungsübertragungsmechanismus Nachrichten in einem unveränderten Zustand an einen nachfolgenden Knoten umfasst, wenn die Nachricht einen Unidirektionalitätsanzeiger enthält, der nicht gesetzt ist.

## Revendications

1. Méthode de transmission d'informations d'adressage de l'appelant dans un réseau de télécommunications ayant recours au Signalling System N° 7, la méthode comprenant la conduite d'une phase d'établissement d'appel entre deux noeuds du réseau de télécommunications en vue de réserver un canal pour données utilisateur, la phase d'établissement comprenant :
la transmission d'un Initial Address Message du premier noeud à un noeud ultérieur, ledit Initial Address Message contenant un indicateur d'Application Transfer Mechanism notifiant au noeud ultérieur que des informations d'adressage seront transmisses dans un ou plusieurs messages Application Transfer Mechanism Messages ultérieurs ; et
la transmission dudit un ou desdits plusieurs messages Application Transfer Mechanism Messages du premier noeud au noeud ultérieur.

2. Méthode selon la revendication 1, dans laquelle le message Initial Address Message et le(s) message(s) Application Transfer Mechanism Message(s) contiennent chacun un Application Transport Parameter (APP) qui achemine lesdites informations d'adressage.

3. Méthode selon la revendication 2, dans laquelle chaque APP contient un drapeau Unidirectional Indicator indiquant à un noeud récepteur si l'APP fait partie d'une transmission d'égal à égal ou si l'APP se rapporte à un contexte d'établissement d'appel de base.

4. Méthode selon l'une des revendications qui précèdent, dans laquelle ledit message Initial Address Message contient une quantité limitée d'informations d'adressage de l'appelant.

5. Méthode selon l'une des revendications qui précèdent, dans laquelle les informations d'adressage de l'appelant transmises dans ledit un ou lesdits plusieurs messages Application Transfer Mechanism Messages comprennent au moins l'un de : la localisation géographique de l'utilisateur ; l'ID de l'appelant logique ; l'ID de l'abonné logique ; l'ID de l'appelant physique ; et le nom de l'utilisateur.

6. Méthode selon l'une des revendications qui précèdent, dans laquelle ledit Initial Address Message et ledit/lesdits Application Transfer Mechanism Message(s) sont transmis via le réseau de télécommunications dans des paquets de données isolés respectifs.

7. Méthode selon la revendication 6, dans laquelle le dernier message Application Transfer Mechanism Message contient un indicateur défini pour indiquer au noeud récepteur que le message est le dernier Application Transfer Mechanism Message.

8. Equipement pour transmettre des informations d'adressage de l'appelant dans un réseau de télécommunications ayant recours au Signalling System N° 7, dans lequel une phase d'établissement d'appel est conduite entre deux noeuds du réseau de télécommunications en vue de réserver un canal pour données utilisateur, l'équipement comprenant :
des premiers moyens de traitement prévus au niveau dudit premier noeud et conçus pour générer un Initial Address Message et pour transmettre ce Message du premier noeud au noeud ultérieur, ledit message Initial Address Message contenant un indicateur d'Application Transfer Mechanism notifiant au noeud ultérieur que des informations d'adressage seront transmises dans un ou plusieurs messages Application Transfer Mechanism Messages ultérieurs ; et
des seconds moyens de traitement conçus pour générer lesdits un ou plusieurs Application Transfer Mechanism Messages et transmettre ledit/lesdits Message(s) du premier noeud au noeud ultérieur.

9. Equipement selon la revendication 8, dans lequel lesdits premiers et seconds moyens de traitement sont procurés par un système informatique programmé de manière adéquate.

10. méthode pour transmettre des informations dans un réseau de télécommunications ayant recours au Signalling System N° 7, au cours d'une phase d'établissement d'appel entre deux noeuds du réseau, les informations étant transmises en mode unidirectionnel d'un premier des noeuds au noeud ultérieur et étant destinées à une application prévue au niveau du noeud ultérieur, la méthode comprenant :
la transmission d'un message Initial Address Message dudit premier noeud au noeud ultérieur, ledit Initial Address Message contenant un indicateur d'Application Transfer Mechanism notifiant au noeud ultérieur que lesdites informations seront transmises dans un ou plusieurs messages Application Transfer Mechanism Messages ultérieurs ; et
la transmission dudit un ou plusieurs Application Transfer Mechanism Messages du premier noeud au noeud ultérieur,
la méthode comprenant encore l'inclusion , dans le ou chacun des Application Transfer Mechanism Messages, d'un drapeau indiquant à un noeud récepteur si oui ou non le message est un message unidirectionnel.

11. Méthode selon la revendication 10, dans laquelle ledit noeud ultérieur est un noeud intermédiaire dans le trajet de transmission desdites informations, la méthode comprenant le relais des messages Application Transfer Mechanism Messages reçus à un noeud ultérieur à l'état inaltéré, lorsque les messages contiennent un drapeau unidirectionnel qui n'a pas été mis en place.
